# EUROPÄISCHE PATENTSCHRIFT

(11) **EP 1 025 500 B1**
(45) Veröffentlichungstag und Bekanntmachung des Hinweises auf die Patenterteilung: **10.12.2003**
(21) Anmeldenummer: 99953691.5
(22) Anmeldetag: 02.09.1999
(51) Int. Cl.: G06F 11/26

(54) **VERFAHREN UND VORRICHTUNG ZUR SYSTEMSIMULATION VON MIKROCONTROLLERN/MIKROPROZESSOREN UND ZUGEHÖRENDEN PERIPHERIEMODULEN**
METHOD AND DEVICE FOR SYSTEM SIMULATION OF MICROCONTROLLERS/MICROPROCESSORS AND CORRESPONDING PERIPHERAL MODULES
PROCEDE ET DISPOSITIF POUR LA SIMULATION DE SYSTEME DE MICROCONTROLEURS/MICROPROCESSEURS ET DE MODULES PERIPHERIQUES ASSOCIES

(30) Priorität: 02.09.1998 DE 19840033
(43) Veröffentlichungstag der Anmeldung: 09.08.2000
(73) Patentinhaber: Infineon Technologies AG, 81669 München (DE)
(72) Erfinder: MAYER, Albrecht, D-82041 Deisenhofen (DE)
(74) Vertreter: Jannig, Peter, Dipl.-Ing.
(86) Internationale Anmeldenummer: DE9902778
(87) Internationale Veröffentlichungsnummer: WO00014639

(56) Entgegenhaltungen:
- US-A- 5 546 562
- US-A- 5 663 900
- US-A- 5 692 161

## Beschreibung

Die Erfindung betrifft ein Verfahren zur Systemsimulation sowie eine Vorrichtung zur Durchführung des Verfahrens.

Simulationen von Rechnermodulen dienen dazu, die Systemarchitektur eines Rechners zu optimieren, eine geeignete Software zu entwickeln und frühzeitig Fehler zu erkennen, bevor die Hardware tatsächlich realisiert wird. Dadurch kann erheblicher Entwicklungsaufwand eingespart werden.

Muster eines Systems ist hierbei die Anordnung eines Microcontrollers mit Peripheriemodulen und externer Umgebung zu verstehen. Der Microcontroller im speziellen ist die reine Programmverarbeitungdseinheit (CPU). Im allgemeinen besitzen Microcontrollerchips aber auch Peripheriemodule auf dem Chip. Peripheriemodule können hierbei die unterschiedlichsten Aufgaben besitzen, z. B. Analog zu Digital Wandler (ADC), Zähler, serielle Schnittstellen usw. Peripheriemodule sind in diesem Zusammenhang immer Hardwaremodule.

Wenn zum Beispiel für einen Mikrocontroller ein Peripheriemodul entwickelt werden soll, wird dieses Modul mit typischen Signalmustern simuliert, wobei der vorzugsweise ebenfalls simulierte Mikroprozessor das Modul konfiguriert und steuert. Die simulierten Zustände des Moduls werden durch den Mikroprozessor abgefragt und ausgewertet. Da die Simulationen taktzyklengenau sind, werden alle Module immer mitsimuliert, wenn der Mikrocontroller die Zustände des Peripheriemoduls auswertet. Diese Auswertung kann die Simulationszeit erheblich verlängern.

Insbesondere in dem Fall, in dem mehrere Module gleichzeitig simuliert werden, kann jedoch der gesamte Ablauf eine relativ lange Zeitdauer erfordern, zumal aufgrund des einheitlichen Prozessortaktes die Simulation aller Module stets weiterläuft, auch wenn gerade die Zustände eines Moduls ausgewertet werden.

Bisher wurde die verlängerte Simulationszeit in Kauf genommen oder es wurde die Auswertung der Peripheriezustände auf ein Minimum reduziert bzw. nicht während der Systemsimulation gemacht.

US-A-546 562 beschreibt ein Verfahren zur Simulation eines systems, dass einen Mikroprozessor und Peripheriegeräte umfasst, wobei eine Folge von Signalmustern an das zu simulierende System angelegt wird.

Aus EP 0 777 180 A2 ist bereits ein Verfahren zur Simulation und Emulation von Systemen, bestehend aus Software und (simulierten) Hardware Komponenten, bekannt. Das Verfahren sieht vor, die Interaktion zwischen den Hardware und Software Komponenten zu ermöglichen und gleichzeitig beide Systeme weitgehend zu entkoppeln.

Die Grundidee dieses Verfahrens ist es, die Uhren der Komponenten unabhängig laufen zu lassen und sie nur an den Stellen, an denen eine Interaktion zwischen den Systemen erfolgt, für die unbedingt notwendige Zahl von Taktzyklen zu synchronisieren. (Anm.: Hierbei ist der Ausdruck "Uhr einer Komponente" in dem Sinne verwendet, daß damit die simulierte Zeit gemessen wird.) Die reale Zeit ist natürlich für alle Komponentensimulationen gleich. Um den Unterschied zu verdeutlichen: Die eine Sekunde simulierte Zeit kann z. B. eine Stunde reale Zeit dauern.

Der Vorteil dieses Verfahrnes liegt darin, daß eine schnell simulierbare Systemkomponente nicht von einer langsamen ausgebremst wird. Das gilt natürlich nur, wenn die Interaktion zwischen den Komponenten gering ist. Sind dagegen beide Uhren starr synchronisiert, dann kann die Simulationsgeschwindigkeit niemals höher als die der langsamsten Komonenten sein.

Der Nachteil des Verfahrens liegt darin, daß es in vielen Systemsimulationen nicht tolerierbar ist, daß die Uhren der Komponenten keinerlei absolute Synchronisation besitzen. Hinzu kommt, daß Simulationsläufe nicht völlig reproduzierbar sind, da die relative Stellung der Uhren der Teilkomponenten z. B. durch die Auslastung der Simulationsrechner beeinflußt wird.

Der Erfindung liegt deshalb die Aufgabe zugrunde, ein Verfahren und eine Vorrichtung der eingangs genannten Art anzugeben, mit dem der gesamte Simulationsablauf wesentlich beschleunigt werden kann.

Diese Aufgabe wird erfindungsgemäß durch die Gegenstande der unabhängigen Ansprüche gelöst

Demnach sind eine erste Abfolge von Verfahrensschritten zur Simulation des Moduls mit vorbestimmten Signalmustern und eine zweite Abfolge von Verfahrensschritten zur Abfrage und zur Auswertung von durch die Simulation hervorgerufenen Systemzuständen vorgesehen, wobei die erste Abfolge zur Durchführung der zweiten Abfolge nach Maßgabe von in die erste Abfolge eingefügte Marken unterbrochen und die zweite Abfolge in einer an die Auswertung angepaßten, beschleunigten Betriebsart ausgeführt wird.

Während der normalen Simulation wird der Mikrocontroller und das Peripheriemodul taktzyklengenau simuliert, während bei der beschleunigten Codeausführung dagegen keine "simulierte" Zeit vergeht, d. h., daß der Programmteil in einer Art Instruction-Set-Simulator abgearbeitet wird.

Unter beschleunigter Betriebsart bzw. Codeausführung ist dabei zu verstehen, daß nur ein geringer Teil des Systemssimuliert/ausgeführt wird und das zum Teil noch in einer vereinfachten Form. Ein Beispiel ist, daß nur die CPU als Befehlssatz-Simulator Programmcode verarbeitet und das übrige System nicht simuliert wird. Ein Beispiel für ein Peripheriemodul ist eine serielle Schnittstelle, die Daten im Ausgangspuffer direkt im Speicher für die Simulationsauswertung ablegt. Im Falle der nichtbeschleunigten Betriebsweise, würde die serielle Schnittstelle die Daten bitweise über mehrere Taktzyklen hinweg in ein Ausgangssignal umsetzen, das dann von einem Empfänger bitweise empfangen, zusammengesetzt und im Speicher abgelegt wird.

In einer Ausführungsform ist vorgesehen, daß während der beschleunigten Codeausführung auch bestimmte Peripheriemodule rein funktional mitsimuliert werden.

Die Aufgabe wird für die Vorrichtung zur Durchführung des Verfahrens dadurch gelöst, daß eine Mikroprozessor-Steuereinheit zur Simulation des Moduls vorgesehen ist durch Erzeugung von taktzyklenbasierten Signalmustern sowie zur Abfrage und zur Auswertung der durch die Simulation hervorgerufenen Systemzustände während einer Programmunterbrechung durch Aktivierung eines Befehlssatz-Simulators.

Ein besonderer Vorteil dieser Lösungen besteht darin, daß durch die Trennung der eigentlichen Systemsimulation von der Auswertung der Simulationsergebnisse eine wesentliche Verringerung der für den Gesamtablauf erforderlichen Zeit erreicht werden kann, da in der Auswertungsphase der Prozessor einerseits nicht mit den dann überflüssigen Simulationsvorgängen belastet ist und andererseits die Auswertung an sich durch die beschleunigte Betriebsart schneller abläuft.

Weitere Vorteile bestehen darin, daß das Programm die Zustände des Peripheriemoduls umfassend kontrollieren und testen kann. Es muß nicht ein zusätzliches externes Auswertungsprogramm aktuell gehalten werden. Darüber hinaus kann vollständig verhindert werden, daß die Auswertung das Zeitverhalten des Programms beeinflußt.

Ein entscheidender Vorteil besteht darüber hinaus darin, daß das für die Systemsimulation und den simulierten Mikrocontroller erarbeitete Programm nach Entfernung der vorgesehenen Marken für den tatsächlich realisierten, also in Silizium gegossenen Mikrocontroller eingesetzt werden kann.

Zusammenfassend besteht die Erfindung zur Simulation von Rechnermodulen im Wesentlichen darin, daß sich die Systemsimulation aus der Sicht des Mikrocontrollers bzw. Mikroprozessors in zwei Teilsimulationen unterteilen lassen: Zum einen in die eigentliche Systemsimulation, also in die Simulation des Peripheriemoduls, das mit typischen Signalmustern simuliert wird, und in die Simulation des Mikrocontollers. Die zweite Teilsimulation betrifft die Auswertung von abgefragten Systemzuständen. Wenn die Auswertungsphase durch das vorgeschlagene Verfahren beschleunigt wird, wird sowohl das simulierte Zeitverhalten genauer, als auch die gesamte Simulationszeit wesentlich verringert.

Das erfindungsgemäße Verfahren wird nachfolgend anhand eines Ausführungsbeispieles näher erläutert.

Als Ausführungsbeispiel wird die Simulation eines Mikrocontrollers vom Typ 8051 angenommen.

Beim Simulationsmodell des 8051-Mikrocontrollers sei angenommen, daß das erfindungsgemäße Verfahren implementiert ist. Beispielsweise kann der Assemblercode für das Simulationsmodell des 8051-Mikrocontrollers folgendermaßen lauten:

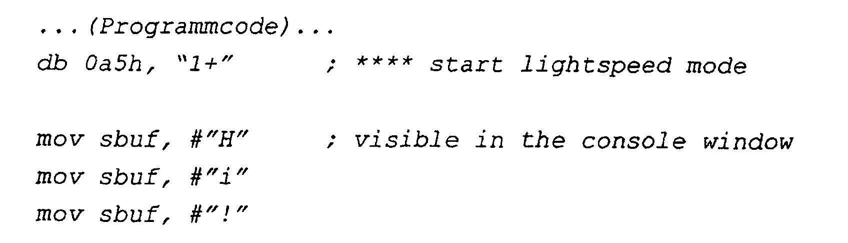

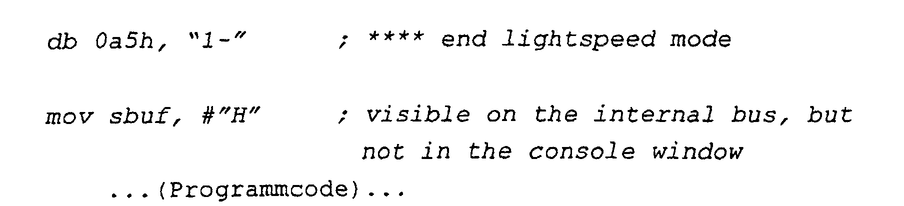

Der Programmcode wird zwischen den Marken direkt abgearbeitet, ohne daß das Simulationsmodell Taktflanken benötigt. Der hierbei abgearbeitete Programmcode befindet sich vor den Marken und nach den Marken und ist oben lediglich durch Punkte (...) angedeutet. Als Marken können die üblicherweise nicht verwendeten Opcode a5h mit der nachfolgenden ASCII-Zeichenfolge "1+" und "1-" zum Starten bzw. zum Beenden der zweiten Abfolge von Verfahrensschritten verwendet werden. Auch geeignete Opcodesequenzen können verwendet werden. Die zweite Abfolge von Verfahrensschritten wird nachfolgend als "lightspeedmode" bezeichnet.

Während dieser zweiten Abfolge von Verfahrensschritten wird die serielle Schnittstelle des Simulationsmodells des 8051-Mikrocontrollers nachgebildet, indem alle Ausgaben vom Simulationsmodell auf ihr Register SBUF direkt an das Konsolenfenster geschrieben werden.

Anhand eines weiteren Ausführungsbeispiels wird die Erfindung im Zusammenhang von Figuren weiter erläutert. Es zeigen:
- Fig. 1:: ein Blockschaltbild für eine Anordnung zur Gesamtsystemsimulation nach der Erfindung, und
- Fig. 2:: einen Ausschnitt von Verfahrensschritten einer CPU, die nach dem erfindungsgemäßen Verfahren betrieben wird.

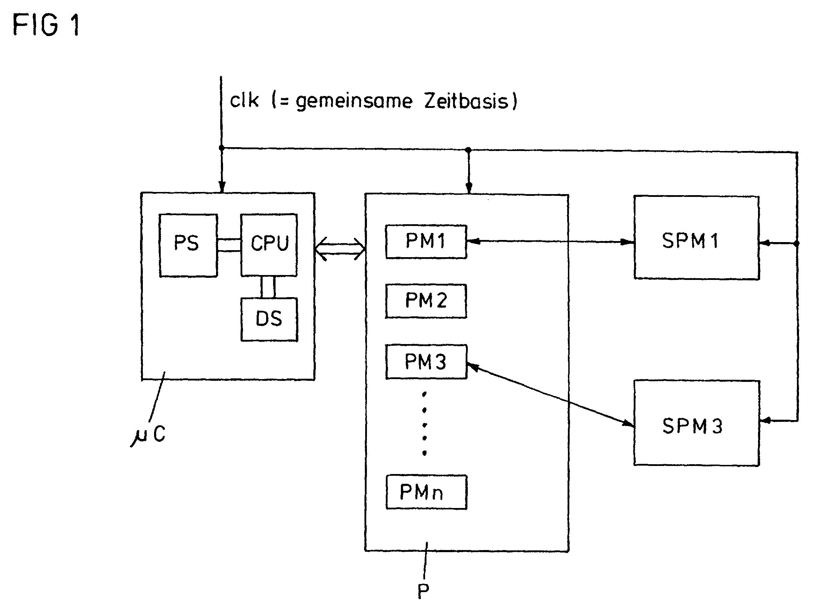

In Fig. 1 ist ein Blockschaltbild für eine Anordnung zur Gesamtsystemsimulation nach der Erfindung dargestellt. Das Blockschaltbild zeigt den Kern eines Microprozessors µC, der eine CPU-Einheit CPU, einen Programmspeicher PS und einen Datenspeicher DS enthält, der Microprozessor µC ist mit einer Peripherieeinheit P in Verbindung, die mehrere Peripheriemodule PM1, PM2, PM3 bis Pmn aufweist. Zusätzlich sind zwei Blöcke für die simulierte Umgebung des Peripheriemoduls PM1 und des Peripheriemoduls PM3 dargestellt. Die Blöcke sind mit den Bezugszeichen SPM1 und SPM3 bezeichnet. Der Block SPM1 könnte beispielsweise ein simulierter Sinusgenerator sein. Der mit dem Bezugszeichen SPM3 bezeichnete Block könnte beispielsweise eine simulierte Konsole sein. Als Peripheriemodul PM1 kann beispielsweise ein Analog-/Digital-Wandler als Peripheriemodul PM2 ein Zähler und als Peripheriemodul PM3 eine serielle Schnittstelle vorgesehen sein. Sämtliche Komponenten, also der Microprozessor µC, die Peripheriemodule PM1 bis Pmn und die simulierten Umgebungen für die Peripheriemodule stehen mit einer gemeinsamen Zeitbasis clk, also einem gemeinsamen Takt, miteinander in Verbindung.

Eine Systemsimulation könnte bei einer solchen Anordnung beispielsweise folgendermaßen aussehen. Das Peripheriemodul PM1, also z. B. Analog-/Digital-Wandler, mißt die Spannung des simulierten Sinusgenerators und löst nach jeder Messung einen Interrupt aus. Die CPU liest daraufhin den Wert aus dem Ergebnisregister des Analog-/Digital-Wandlers und schreibt ihn in den Datenspeicher DS. Nach einer bestimmten Anzahl von Messungen, schaltet sich die CPU in die beschleunigte Betriebsart und wertet diese Messungen aus. Nachdem sie dies gemacht hat, schaltet sie in den normalen Moduls zurück und die Simulation läuft genau an der Stelle weiter, an der umgeschaltet wurde. Darum ist die Systemsimulation völlig unbeeinflußt von der Auswertung.

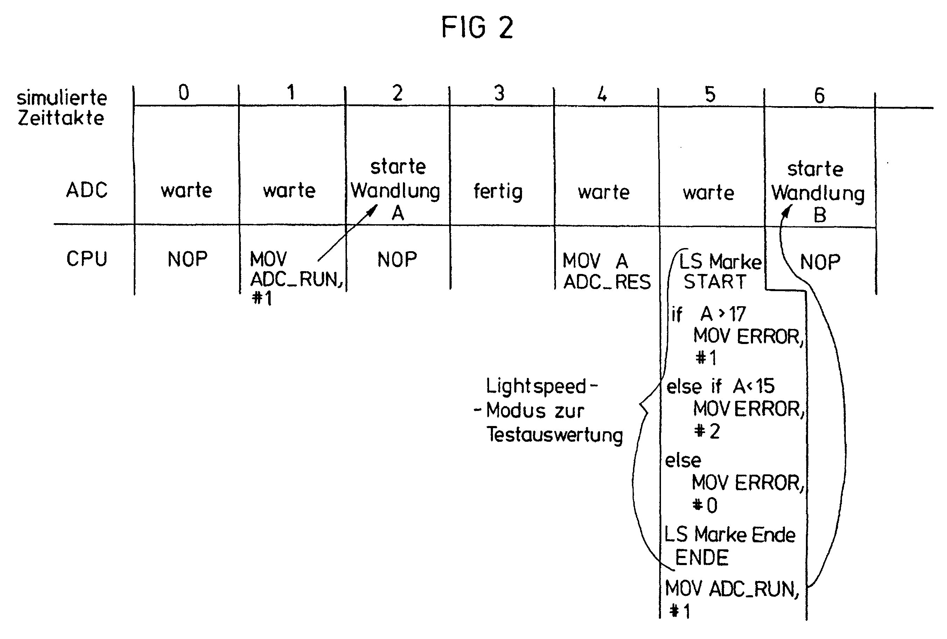

In Fig. 2 ist getragen auf simulierte Zeittakte 0 bis 6 der Status des Analog-/Digital-Wandlers (ADC) und der CPU bzw. deren Befehle dargestellt. Die CPU startet demnach eine ADC-Wandlung und kopiert das Ergebnis in den Speicher. Im Lightspeed-Modus zur Testauswertung wird dann getestet, ob der Erwartungswert 16 +/- 1 gemessen wurde. Dieser Test ist ohne Einfluß auf die Gesamtsystemsimulation, da die Wandlung 2 ohne Verzögerung gestartet wird.

Bei dem erfindungsgemäßen Verfahren sind die "Uhren aller Teilkomponenten" grundsätzlich starr gekoppelt und laufen synchron. Die Ausnahme bildet lediglich der sogenannte Lightspeed-Modus, bei dem die Uhr der Hardware Komponenten stillsteht und die Software auf der CPU jedoch abläuft. Vor einem Zugriff von der Software auf die Hardware muss der Lightspeed-Modus explizit verlassen werden, was durch spezielle Marken, die ansonsten im Programm nicht vorhanden sind, ausgelöst wird.

Der Grund für die zwei verschiedenen Modi bei dem erfindungsgemäßen Verfahren liegt in der Möglichkeit der vollständigen Kontrolle der Uhr aller Teilkomponenten. Dies kann vorteilhafterweise für zwei Anwendungen genutzt werden:
1. Auf der simulierten CPU können Testprogramme ausgeführt werden, ohne daß die simulierte Zeit vergeht und damit die Systemsimulation an sich beeinflußt wird.
2. Die Simulation kann beschleunigt werden, wenn die Software nur auf der CPU läuft, ohne daß die Uhr der Hardware Komponenten weiterläuft.

Im Gegensatz zu dem bekannten Verfahren ist das erfindungsgemäße Verfahren deterministisch und reproduzierbar.

## Patentansprüche

1. Verfahren zur Simulation eines Systems, das einen Kern eines Mikroprozessors oder eines Mikrocontrollers und mit dem Kern verbundene Peripheriemodule umfaßt, wobei das Verfahren die Ausführung einer ersten Abfolge von Verfahrensschritten zur Simulation des Systems unter Verwendung vorbestimmter Signalmuster umfaßt,: **dadurch gekennzeichnet, daß** das Verfahren ferner umfaßt:
Ausführung einer zweiten Abfolge von Verfahrensschritten durch den Kern des Mikroprozessors oder des Mikrocontrollers zur Abfrage und Auswertung von durch die Ausführung der ersten
Abfolge von Verfahrensschritten hervorgerufenen Systemzuständen,
wobei die Ausführung der ersten Abfolge von Verfahrensschritten durch die Ausführung der zweiten Abfolge von Verfahrensschritten nach Maßgabe von in die erste Abfolge von Verfahrensschritten eingefügten Marken unterbrochen wird, und
wobei die zweite Abfolge von Verfahrensschritten in einer an die Auswertung angepaßten, beschleunigten Betriebsart durchgeführt wird.

2. Verfahren nach Anspruch 1,
**dadurch gekennzeichnet,**
**daß** die Ausführung der ersten Abfolge von Verfahrenssschritten so erfolgt, daß eine taktzyklenbasierte Simulation des Kerns und der Peripheriemodule durchgeführt wird.

3. Verfahren nach Anspruch 1 oder 2,
**dadurch gekennzeichnet,**
**daß** die erste Abfolge von Verfahrensschritten eine Folge von aufeinanderfolgenden Programmcodes ist.

4. Verfahren nach Anspruch 3,
**dadurch gekennzeichnet,**
**daß** die Marken durch im Programmcode üblicherweise nicht verwendete Opcodes oder Opcodesequenzen gebildet sind.

5. Verfahren nach einem der Ansprüche 1 bis 4,
**dadurch gekennzeichnet,**
**daß** während der zweiten Abfolge von Verfahrenssschritten vorgegebene Peripheriemodule funktional mitsimuliert werden.

6. Vorrichtung zur Durchführung des Verfahrens nach einem der Ansprüche 1 bis 5,
**gekennzeichnet durch**
eine Steuereinheit zur Simulation des Systems **durch** Erzeugung von im wesentlichen taktzyklengenauen Signalmustern sowie zur Abfrage und zur Auswertung der **durch** die Simulation hervorgerufenen Systemzustände während einer Programmunterbrechung **durch** Aktivierung eines Befehlssatz-Simulators.

## Claims

1. Method for simulating a system which comprises a core in a microprocessor or in a microcontroller and peripheral modules connected to the core,
where the method involves executing a first series of method steps for simulating the system using predetermined signal patterns,
**characterized in that** the method also involves:
execution of a second series of method steps by the core of the microprocessor or of the microcontroller in order to request and evaluate system states brought about by the execution of the first series of method steps,
where the execution of the first series of method steps is interrupted by the execution of the second series of method steps as stipulated by markers inserted into the first series of method steps, and
where the second series of method steps is executed in an accelerated operating mode which is matched to the evaluation.

2. Method according to Claim 1,
**characterized**
**in that** the first series of method steps is executed such that the core and the peripheral modules are simulated on the basis of clock cycle.

3. Method according to Claim 1 or 2
**characterized**
**in that** the first series of method steps is a succession of successive program codes.

4. Method according to Claim 3,
**characterized**
**in that** the markers are formed by opcodes or opcode sequences which are normally not used in the program code.

5. Method according to one of Claims 1 to 4,
**characterized**
**in that**, during the second series of method steps, prescribed peripheral modules have their functions simulated at the same time.

6. Apparatus for carrying out the method according to one of Claims 1 to 5,
**characterized by**
a control unit for simulating the system by producing signal patterns which fundamentally have clock cycle accuracy and for requesting and for evaluating the system states brought about by the simulation during a program interruption by activating an instruction set simulator.

## Revendications

1. Procédé de simulation d'un système comprenant un noyau d'un microprocesseur ou d'un microcontrôleur et des modules périphériques reliés au noyau, le procédé comprenant l'exécution d'une première succession d'étapes de procédé pour la simulation de système à l'aide d'échantillons de signal prédéterminés, **caractérisé en ce que** le procédé comprend en outre :
l'exécution d'une deuxième succession d'étapes de procédé, par le noyau du microprocesseur ou du microcontrôleur, permettant d'interroger et d'analyser des états de système provoqués par l'exécution de la première succession d'étapes de procédé,
dans lequel l'exécution de la première succession d'étapes de procédé est interrompue par l'exécution de la deuxième succession d'étapes de procédé conformément à des repères insérés dans la première succession d'étapes de procédé, et
dans lequel la deuxième succession d'étapes de procédé est exécutée dans un mode de fonctionnement accéléré, adapté à l'analyse.

2. Procédé selon la revendication 1, **caractérisé en ce que** l'exécution de la première succession d'étapes de procédé est effectuée de telle sorte qu'une simulation basée sur la fréquence d'horloge du noyau et des modules périphériques soit réalisée.

3. Procédé selon la revendication 1 ou 2, **caractérisé en ce que** la première succession d'étapes de procédé est une série de codes programme consécutifs.

4. Procédé selon la revendication 3, **caractérisé en ce que** les repères sont formés par des codes opération ou des séquences de codes opération non utilisés habituellement dans le code programme.

5. Procédé selon l'une quelconque des revendications 1 à 4, **caractérisé en ce que** des modules périphériques spécifiés pendant la deuxième succession d'étapes de procédé sont simulés en même temps sur le plan fonctionnel.

6. Dispositif de mise en oeuvre du procédé selon l'une quelconque des revendications 1 à 5, **caractérisé par** une unité de commande permettant de simuler le système par la production d'échantillons de signal essentiellement à une fréquence d'horloge précise, ainsi que permettant d'interroger et d'analyser les états de système provoqués par la simulation pendant une interruption de programme par l'activation d'un simulateur de jeu de commandes.
